# EUROPÄISCHE PATENTSCHRIFT

(11) **EP 1 686 358 B1**
(45) Veröffentlichungstag und Bekanntmachung des Hinweises auf die Patenterteilung: **24.12.2008**
(21) Anmeldenummer: 05100476.0
(22) Anmeldetag: 26.01.2005
(51) Int. Cl.: G01G 23/01

(54) **Gravimetrisches Messgerät mit Kalibriergewicht**
Gravimetric measuring apparatus with calibrating weight
Dispositif de mesure gravimétrique avec poids de calibrage

(43) Veröffentlichungstag der Anmeldung: 02.08.2006
(73) Patentinhaber: Mettler-Toledo AG, 8606 Greifensee (CH)
(72) Erfinder: Tellenbach, Jean-Maurice, 8442 Hettlingen (CH); Loher, Urs, 8967 Widen AG (CH); Bruderer, Richard, 8405 Winterthur (CH)

(56) Entgegenhaltungen:
- EP-A- 0 020 030
- EP-A- 0 955 530
- DE-A1- 19 953 987
- SU-A- 723 389
- US-B1- 6 232 567
- PATENT ABSTRACTS OF JAPAN Bd. 2002, Nr. 10, 10. Oktober 2002 (2002-10-10) -& JP 2002 168683 A (KUBOTA CORP), 14. Juni 2002 (2002-06-14)

## Beschreibung

Die vorliegende Erfindung betrifft ein gravimetrisches Messgerät, insbesondere eine Waage, mit einem Kalibriergewicht.

Zur Kontrolle der Empfindlichkeit einer Waage ist es üblich, von Zeit zu Zeit ein genaues Kalibriergewicht auf die Waagschale aufzubringen, dieses zu wiegen und aus dem Wägeergebnis Korrekturfaktoren zu ermitteln. Es sind auch Waagen bekannt, die ein eingebautes Kalibriergewicht aufweisen, das bei Bedarf nach Art eines Schaltgewichtes mit dem Lastaufnahmebereich des Wägemechanismus gekoppelt werden kann.

Bei Direktauflage weisen die Kalibriergewichte am Lastaufnahmebereich der Maximallast der Waage entsprechend hohe Massen und dadurch auch ein grosses Volumen auf. Die Masse und das Volumen des Kalibriergewichts kann reduziert werden, wenn zwischen das Kalibriergewicht und den Lastaufnahmebereich ein Hebelwerk geschaltet wird, das die vom Kalibriergewicht erzeugte Kraft auf den Lastaufnahmebereich übersetzt.

Eine solche nach dem Prinzip der elektromagnetischen Kraftkompensation arbeitende Waage mit eingebautem, stabförmigem Kalibriergewicht wird in EP 0 955 530 B1 offenbart. Da der Kalibriergewichtsarm stets mit dem Lastaufnahmebereich gekoppelt ist, dient er lediglich als Aufnahme für das Kalibriergewicht während des Kalibriervorganges und ist nicht Teil des Kalibriergewichts selbst.

In US 6 232 567 B1 wird ebenfalls eine nach dem Prinzip der elektromagnetischen Kraftkompensation arbeitende Wägezelle offenbart, mit deren Lastaufnahmebereich eine Kalibriergewichts-Aufnahme fest verschraubt ist. Diese ist so ausgestaltet, dass sie ein Kalibriergewicht von einem nicht dargestellten Kalibriergewichts- Auflagemechanismus aufnehmen kann.

Die EP 0 020 030 A1 offenbart eine Kalibriervorrichtung für eine Wägezelle. Die Wägezelle ist in bekannter Weise aufgebaut und weist einen Lastaufnahmebereich und einen Fixbereich auf. Mit dem Lastaufnahmebereich ist ein Kalibriergewichtsarm konstant verbunden. Zwei Bolzenpaare sind mit dem Kalibriergewichtsarm starr verbunden und dienen als Kalibriergewichtauflagestellen, wenn zwei voneinander unabhängig auflegbare Gewichte zwecks Prüfung und Kalibrierung der Wägezelle einzeln oder gleichzeitig auf diese Bolzenpaare aufgelegt werden. Die beiden Gewichte werden, sofern sie nicht zur Kalibrierung auf den Bolzenpaaren aufgelegt sind, mittels Winkelhebeln und Anschlägen in einer vertikalen Trägerplatte gehalten, welche über Stützen mit dem feststehenden Teil der Wägezelle verbunden ist.

In DE 199 53 987 A1 wird eine mit Dehnmessstreifen bestückte Wägezelle offenbart die ein an einem U-förmigen Kalibriergewichtsarm angebrachtes, zylinderförmiges Kalibriergewicht aufweist. Dieser Kalibriergewichtsarm ist Teil eines Hebelwerks zur Übertragung und Verstärkung der Kalibriergewichtskraft auf den Lastaufnahmebereich der Wägezelle und bleibt auch während des Wägebetriebes mit dem Lastaufnahmebereich starr verbunden.

JP2002168683 A offenbart eine mit Dehnmessstreifen bestückte Wägezelle die ein Kalibriergewicht mit einem Übersetzungshebel aufweist, wobei der Übersetzungshebel und das Kalibriergewicht sowohl zur Kalibrierung als auch zur Totlastkompensation verwendet werden. Am Übersetzungshebel sind mehrere quaderförmige Kalibriergewichtsstücke starr befestigt. Das Kalibriergewicht und der Übersetzungshebel bilden dabei eine Einheit und sind nicht wie in den vorangehend zitierten Schriften/Veröffentlichungen mittels eines Transfermechanismus voneinander entkoppelbar. Durch die Verschiebung des Übersetzungshebel- Drehpunktes mittels einer Hebevorrichtung wird eine der zwei Funktionen Kalibrieren oder Totlastkompensation gewählt. Somit bleibt das Totlastkompensations- beziehungsweise Kalibriergewicht in ständiger Wirkverbindung mit der Wägezelle.

In der SU 723389 A1 wird ein Kalibriergewicht zur Eichung von Kraftmesssystemen für einen ferngesteuerten Transfermechanismus offenbart. Damit für verschiedene Kalibriergewichte mit unterschiedlichen Massen derselbe Transfermechanismus verwendet werden kann, wird ein Kalibriergewicht mit gleich bleibenden Abmessungen vorgeschlagen.

Zu diesem Zweck weist das in der SU 723389 A1 vorgeschlagene Kalibriergewicht eine ringförmige Basisscheibe mit einem ringförmigen Ansatz am Rand auf. In die ringförmige Basisscheibe sind zusätzliche Scheiben einsetzbar, die aneinander und in der Basisscheibe befestigt sind.

Kalibriergewichte, insbesondere solche Kalibriergewichte, deren Gewichtskraft durch ein Hebelwerk übersetzt an den Lastaufnahmebereich übertragen werden, müssen eine definierte, reproduzierbare Lage gegenüber dem Kalibriergewichtsarm, auf den es beim Kalibriervorgang aufgelegt wird, einnehmen. Dies wird mit geeigneten, am Kalibriergewicht angebrachten Positionierungsmitteln erreicht, die in eine entsprechende Positionierungsauflagestelle am Kalibriergewichtsarm eingreifen. Meistens weist das Kalibriergewicht zudem besonders ausgestaltete Transfermittel auf, die das Kalibriergewicht auch gegenüber einem Transfermechanismus, dessen Funktion das Auflegen und Abheben des Kalibriergewichts am Kalibriergewichtsarm ist, positionieren. An den Berührungsstellen zwischen Kalibriergewicht und Kalibriergewichtsarm beziehungsweise zwischen dem Kalibriergewicht und dem Transfermechanismus darf kein Verschleiss und keine Materialübertragung auftreten. Damit ein Kalibriergewicht nicht über die Nutzungsdauer an Masse zunimmt werden Materialien verwendet, deren Oberflächen möglichst nicht oxidieren oder an deren Oberfläche sich eine dichte, stabile Oxydschicht bereits unmittelbar nach der Bearbeitung und vor der Verwendung gebildet hat.

Die Genauigkeit einer Waage hängt im Wesentlichen vom Lastbereich und dem Auflösungsvermögen der Wägezelle ab. Dies führt dazu, dass Waagenreihen mit abgestuften Lastbereichen entwickelt werden. Vorteilhafterweise wird die Masse des Kalibriergewichts dem oberen Limit des Lastbereichs, also der Vollast angepasst, um den Fehler des Korrekturwertes und damit den Einfluss dieses Fehlers beim Wägergebnis möglichst gering zu halten. Jeder Waagentyp hat somit sein, auf die Wägezelle und deren Vollast abgestimmtes Kalibriergewicht. Die Grösse des Waagengehäuses wird dabei vom benötigten Bauraum bestimmt. Wird eine Waagenreihe mit verschiedenen Lastbereichen aber gleichem Waagengehäuse angestrebt, richtet sich die Grösse des Gehäuses nach dem grössten Lastbereich, insbesondere bei der Verwendung von Wägezellen, die nicht über ein Hebelsystem zur Übersetzung der Kalibriergewichtskraft verfügen. Die Aufteilung in verschiedene Lastbereiche resultiert in einer hohen Anzahl unterschiedlicher Kalibriergewichte und damit in kleinen Fertigungszahlen derselben. Je nach Auslegung der Kalibriergewichte und der verwendeten Wägezellen müssen zudem unterschiedliche Kalibriergewichtsarme hergestellt werden. Aus wirtschaftlichen Gründen werden deshalb für die Kalibriergewichte möglichst einfache Formen, beispielsweise Zylinderformen gewählt, die zur Vermeidung von zusätzlichen Montagekosten einstückig ausgeführt sind. Nachteilig bei den im Stand der Technik offenbarten Kalibriergewichten ist somit deren Platzbedarf durch die meist einfache Formgebung sowie die benötigte grosse Vielfalt an Kalibriergewichten für den Einsatz in verschiedenen gravimetrischen Messgeräten, insbesondere auch verschiedenen Waagentypen innerhalb einer Waagenfamilie beziehungsweise einer Waagenreihe.

Aufgabe der vorliegenden Erfindung ist es daher, ein auf einen Kalibriergewichtsarm auflegbares Kalibriergewicht derart zu gestalten, dass es in einer Vielfalt von unterschiedlich gebauten gravimetrischen Messgeräten, insbesondere den verschiedenen Waagentypen innerhalb einer Waagenfamilie verwendet werden kann.

Gelöst wird diese Aufgabe mit den Merkmalen des Anspruchs 1. Ein gravimetrisches Messgerät, insbesondere eine Waage, mit einer einen Lastaufnahmebereich und einen Fixbereich aufweisenden Wägezelle weist ein Kalibriergewicht auf. Das Kalibriergewicht weist ein Kalibriergewichtsgrundmodul auf, an dem mindestens ein Befestigungsbereich zur Befestigung von mindestens einem Zusatzgewicht ausgebildet ist. Ferner verfügt das gravimetrische Messgerät über ein Waagengehäuse und über einen Transfermechanismus zum Koppeln beziehungsweise Entkoppeln des erfindungsgemässen Kalibriergewichts mit einem beziehungsweise von einem mit dem Lastaufnahmebereich der Wägezelle verbundenen Kalibriergewichtsarm. Das Kalibriergewicht ist durch die Formgebung des Kalibriergewichtsgrundmoduls und/oder daran positionierter Zusatzgewichte einer im Innern des Waagengehäuses vorhandenen, durch das Waagengehäuse und/oder die Wägezelle begrenzten Form und/oder einem Volumen angepasst. Vorzugsweise entspricht die Masse des erfindungsgemässen Kalibriergewichtsgrundmoduls der Vollast derjenigen Waage, die den kleinsten Lastbereich einer Waagenreihe aufweist.

Je nach Auslegung der verwendeten Wägezelle und des vorhandenen Bauraums innerhalb des Waagengehäuses kann ein Kalibriergewichtsgrundmodul in Stabform, U-Form, H-Form, Y-Form, Ringform oder Becherform ausgestaltet sein wobei U-, Ring-, und Becherformen durchaus vieleckig sein können. Kreisringe und Ovalformen mit beliebig gestalteten Querschnitten sind ebenso möglich.

Die Befestigungsbereiche und Befestigungsmittel stellen eine dauerhafte Verbindung von Zusatzgewichten mit dem Kalibriergewichtsgrundmodul sicher. Gattungsgemäss können als Befestigungsmittel oder Befestigungsbereiche formschlüssige lösbare oder nicht lösbare Verbindungselemente wie Schrauben, Stifte, Nieten, Bolzen, Schrumpfschlauch und dergleichen verwendet werden, aber auch am Kalibriergewichtsgrundmodul ausgebildete Vorsprünge, Taschen, Laschen Bohrungen, Vertiefungen. Selbst wegbegrenzte Linearführungen und dergleichen sind als Befestigungsmittel beziehungsweise Befestigungsbereiche geeignet. Des Weiteren können die Zusatzgewichte durch klemmen, verstemmen, schnappen, schmieden, kleben, löten, schweissen, umgiessen, pressen, aufschrumpfen und dergleichen im Sinne eines Befestigungsmittels an den vorgesehenen Befestigungsbereichen dauerhaft mit dem Kalibriergewichtsgrundmodul verbunden sein.

Während eines Kalibriervorgangs gilt es, das Kalibriergewicht korrekt am Kalibriergewichtsarm zu positionieren. Hierfür ist mindestens ein, mit mindestens einer Positionierungsauflagestelle zusammenwirkendes Positionierungsmittel vorgesehen. Als Positionierungsmittel können Stifte, Bolzen, Laschen, Bohrungen, Vertiefungen, Linearführungen, sphärisch, kegelförmig oder kubisch geformte Vorsprünge und Flächen mit hohem Reibungskoeffizient verwendet werden.

Vorzugsweise ist daher mit dem Kalibriergewichtsgrundmodul mindestens ein Positionierungsmittel starr verbunden, das zur Positionierung des Kalibriergewichtsgrundmoduls bezüglich mindestens einer am Kalibriergewichtsarm ausgebildeten Positionierungsauflagestelle dient. Selbstverständlich kann das Positionierungsmittel aber auch am Kalibriergewichtsarm und die Positionierungsauflagestelle am Kalibriergewichtsgrundmodul ausgebildet sein. Sofern ein Zusatzgewicht mit dem Kalibriergewichtsgrundmodul verbunden ist, kann auch dieses Zusatzgewicht ein oder mehrere Positionierungsmittel oder Positionierungsauflagestellen aufweisen. Da das Positionierungsmittel den Kalibriergewichtsarm an den Positionierungsauflagestellen berührt, muss es an den Berührungsstellen eine verschleissfeste Oberfläche aufweisen, die keine Materialübertragung zulässt.

Das Positionierungsmittel hat die Aufgabe, das Kalibriergewicht während des Kalibriervorganges über die Positionierungsauflagestellen am Kalibriergewichtsarm gegenüber dem Lastaufnahmebereich der Wägezelle in einer Ebene orthogonal zur Kalibrierlastrichtung spielfrei zu positionieren. Dabei ist es unerheblich, ob nur ein Positionierungsmittel in der Ebene positioniert und gleichzeitig als Auflage dient oder ob die Positionierung und Auflage durch mehrere mit dem Kalibriergewichtsgrundmodul starr verbundene Positionierungsmittel erreicht wird. Erfindungsgemäss ist nur ein Positionierungsmittel und somit nur eine Positionierungsauflagestelle notwendig sofern die Auflagestelle eine Fläche ist, die dem Kalibriergewicht gegenüber dem Kalibriergewichtsarm während des Kalibriervorganges genügend Stabilität verleiht. Sofern sich der Schwerpunkt des Kalibriergewichtes unterhalb des Positionierungsmittels befindet, genügt auch nur ein Positionierungsmittel mit punktförmiger Auflage, beispielsweise einen Haken. Das Kalibriergewicht wird dann sinngemäss mit dem Positionierungsmittel an die Positionierungsauflagestelle, beispielsweise eine Vertiefung im Kalibrierarm, eingehängt.

Für rotationssymmetrische Kalibriergewichtsmodule reichen zwei Positionierungsmittel aus. Bei asymmetrischen Kalibriergewichtsmodulen sind mindestens drei Positionierungsmittel notwendig, um eine stabile, definierte Lage des Kalibriergewichts gegenüber dem Kalibriergewichtsarm zu erreichen.

Dabei ist unter dem Begriff Kalibriergewichtsarm jegliche Aufnahme zu verstehen die geeignet ist, das Kalibriergewicht aufzunehmen und mit dem Lastaufnahmebereich der Wägezelle in geeigneter Weise in Anlage zu bringen. Dies kann beispielsweise ein der Übersetzung dienender Hebel sein, der über eine Koppel am Lastaufnahmebereich der Wägezelle angreift oder der, sofern vorhanden, mit einer Kraftübertragungsvorrichtung oder mit einem Kraftübertragungsgestänge der Wägezelle gekoppelt ist. Aber auch ein mit dem Lastaufnahmebereich starr verbundener Arm, Aufnehmer oder eine am Lastaufnahmebereich direkt ausgebildete Positionierungsauflagestelle ist hier als Kalibriergewichtsarm zu verstehen. Als Positionierungsauflagestelle sind Flächen und geometrische Formen wie Vorsprünge, Vertiefungen, Bohrungen, und dergleichen zu verstehen, die bei Auflage des Kalibriergewichts in geeigneter Weise mit den gewählten Positionierungsmitteln eine in einer Ebene orthogonal zur Lastrichtung liegende, definierte Positionierung des Kalibriergewichts gegenüber dem Lastaufnahmebereich ermöglichen.

Es ist auch vorteilhaft, wenn das Positionierungsmittel beispielsweise durch mehrere konisch geformte Partien so gestaltet ist, dass das Kalibriergewicht in verschieden breiten Wägezellen mit entsprechend unterschiedlichen Beabstandungen der Positionierungsauflagestellen eingesetzt werden kann.

Vorzugsweise ist mit dem Kalibriergewichtsgrundmodul mindestens ein Transferelement starr verbunden, das auf einer Transferauflagestelle, die am Transfermechanismushebel ausgebildet ist, aufliegt sobald das Kalibriergewicht durch den Transfermechanismus vom Kalibriergewichtsarm entkoppelt wird. Diese Transferelemente wie auch die Transferauflagestellen müssen verschleissfest sein.

In einer vorteilhaften Ausführungsform wird das Kalibriergewichtsgrundmodul aus rostfreiem Stahl gefertigt, welcher gute Eigenschaften bezüglich Verschleissfestigkeit, Materialübertragung und Korrosionsbeständigkeit aufweist. Es sind aber auch weitere Materialien für das Kalibriergewichtsgrundmodul einsetzbar sofern die Positionierungs- und Transferelemente durch Oberflächenbehandlung, Oberflächenbeschichtung oder durch Anfügen von geeigneten Materialteilen verschleissfest sind und die Oberfläche des Kalibriergewichtsgrundmoduls mittels Oberflächenbehandlung oder Oberflächenbeschichtung gegen Oxidation und/oder Feuchtigkeitsaufnahme geschützt ist.

Die Gestaltung der Zusatzgewichte richtet sich vorzugsweise danach, dass sie sich in die vorhandenen Raumverhältnisse möglichst gut einfügen lassen. Die Zusatzgewichte müssen so gestaltet sein, dass sie sich durch die Befestigungsmittel mit den Befestigungsbereichen des Kalibriergewichtsgrundmoduls kraft-, form- oder stoffschlüssig verbinden lassen. Kraftschlüssige Verbindungen entstehen durch die Übertragung von Kräften. Dazu zählen beispielsweise Druckkräfte oder Reibungskräfte. Der Zusammenhalt der kraftschlüssigen Verbindung wird rein durch die wirkende Kraft gewährleistet. Formschlüssige Verbindungen entstehen durch das Ineinandergreifen von mindesten zwei Verbindungspartnern. Durch die mechanische Verbindung können sich die Verbindungspartner auch ohne oder bei unterbrochener Kraftübertragung nicht lösen. Stoffschlüssige Verbindungen werden alle Verbindungen genannt, bei denen die Verbindungspartner durch atomare oder molekulare Kräfte zusammengehalten werden.

Um das Volumen der Zusatzgewichte klein zu halten, können Materialien aller Art mit hoher Dichte verwendet werden, die entweder über genügend eigene Formstabilität verfügen oder durch geeignete Mittel, beispielsweise einen Behälter oder die Befestigungsmittel des Kalibriergewichtsgrundmoduls formstabil gehalten werden. Zudem können die einzelnen Zusatzgewichte in sich bereits aus mehreren Teilen im Sinne einer vormontierten Baugruppe bestehen und dann erst nach erfolgter Vormontage am Kalibriergewichtsgrundmodul angebracht werden.

Je nach Materialien, die verwendet werden, müssen die Oberflächen gegen die Aufnahme von Feuchtigkeit und/oder gegen Oxidation geschützt werden. Durch die Montage von Zusatzgewichten am Kalibriergewichtsgrundmodul können infolge eng beieinander liegender Flächen Spalten gebildet werden, welche Flüssigkeiten wie beispielsweise Kondenswasser durch die Kapillarwirkung aufnehmen und speichern. Mittels geeigneter Oberflächenbeschichtungen, beispielsweise durch Tauchversiegeln können diese Spalten und Kapillaren des montierten Kalibriergewichts eliminiert werden. Sofern die als Oberflächenbeschichtung aufgebrachte Schicht eine ausreichende Eigenfestigkeit aufweist, kann diese umschliessende Schicht auch als Befestigungsmittel im Sinne einer stoff- oder formschlüssigen Verbindung dienen. Die Schicht der Oberflächenbeschichtung selbst muss dicht sein und darf auch keine Feuchtigkeit aufnehmen.

Eine besonders vorteilhafte Ausgestaltung der Zusatzgewichte zum erfindungsgemässen Kalibriergewicht besteht darin, dass die Zusatzgewichte über Vorsprünge verfügen, die eine Distanzierung grösserer Flächen voneinander zwecks Vermeidung von Kapillaren ermöglichen. Die Vorsprünge müssen dabei nicht zwingend am Zusatzgewicht angeformt sein sondern können beispielsweise in Form von Distanzhülsen im Bereich der Befestigungsmittel angeordnet sein. Es können auch mehrere Zusatzgewichte geschichtet am Kalibriergewichtsgrundmodul befestigt werden, vorausgesetzt, der Einsatzraum des Kalibriergewichts ist vor Feuchtigkeitseinflüssen geschützt oder die Distanzierung der Zusatzgewichte zueinander und zum Kalibriergewichtsgrundmodul ist gewährleistet.

Eine spezielle Weiterbildung des erfindungsgemässen, modularen Kalibriergewichts stellt ein zwischen dem Kalibriergewichtsgrundmodul und/oder zwischen nebeneinander angebrachten Zusatzgewichten mit in Lastrichtung wegbegrenzten Linearführungen versehenes, so genanntes Kettengewicht dar. Beim Auflegen des Kalibriergewichts sind so zwei oder mehr Kalibrierlaststufen erzielbar, die eine Kalibrierabfolge ermöglichen, wie sie in JP1152318 A offenbart ist. Die Linearführung muss so ausgebildet sein, dass sie genügend Spiel aufweist und in den Anschlägen die Teilgewichte zueinander zentriert, so dass beim Auflegen der ersten Gewichtstufe keine Reibung in den Linearführungen entsteht welche eine Stützwirkung verursachen und damit den Korrekturwert negativ beeinflussen würde. Selbstverständlich muss jedes Teilgewicht über entsprechende Transferelemente verfügen.

Einzelheiten des erfindungsgemässen modularen Kalibriergewichts ergeben sich anhand der Beschreibung der in den Zeichnungen dargestellten Ausführungsbeispiele. Es zeigen:
- Fig. 1: die perspektivische Ansicht eines gravimetrischen Messgeräts beziehungsweise einer Waage mit einem auf dem Lastaufnahmebereich aufgelegten, erfindungsgemässen Kalibriergewicht;
- Fig. 2: die perspektivische Explosionsdarstellung eines erfindungsgemässen Kalibriergewichts mit U-förmigem Kalibriergewichtsgrundmodul, Zusatzgewichten und die Wägezelle mit montiertem Kalibriergewichtsarm;
- Fig. 3: die perspektivische Ansicht eines erfindungsgemässen Kalibriergewichts mit an die Innenkontur des Waagengehäuses angepassten Zusatzgewichten;
- Fig. 4: die perspektivische Ansicht eines erfindungsgemässen Kalibriergewichtsgrundmoduls in Ringform;
- Fig. 5: die perspektivische Ansicht eines erfindungsgemässen Kalibriergewichtsgrundmoduls in Becherform;
- Fig. 6: die perspektivische Ansicht eines erfindungsgemässen Kalibriergewichts mit am stabförmigen Kalibriergewichtsgrundmodul ausgebildeten Positionierungs- und Transferauflagestellen;
- Fig. 7: die perspektivische Ansicht eines erfindungsgemässen Kalibriergewichts mit stabförmigem Kalibriergewichtsgrundmodul und am Zusatzgewicht ausgebildeten Positionierungs- und Transferauflagestellen.

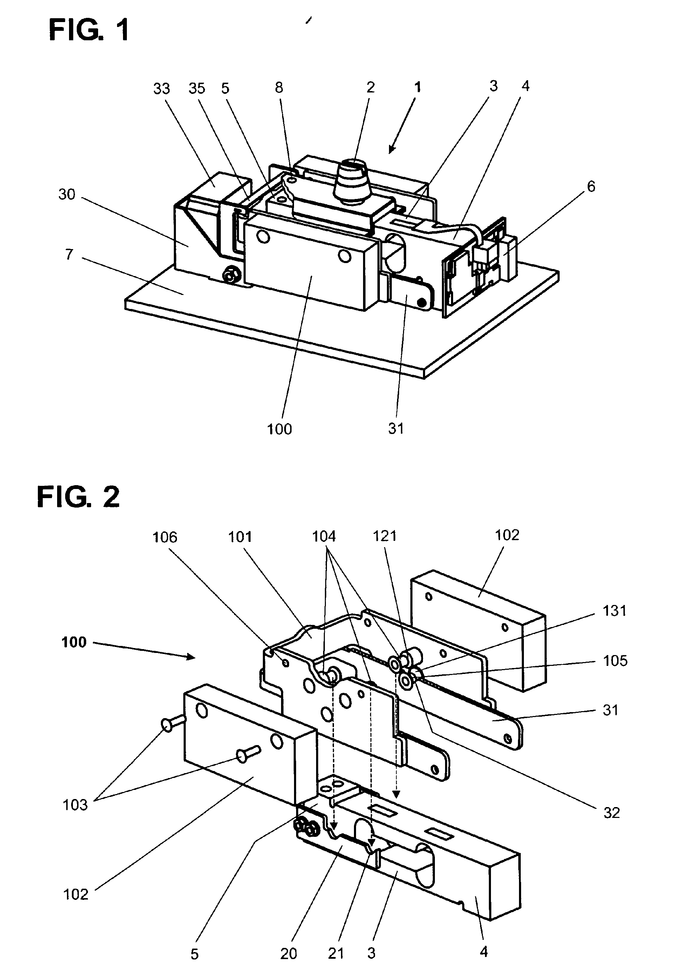

Die Figur 1 zeigt die perspektivische Darstellung eines gravimetrischen Messgeräts 1 beziehungsweise einer Waage bei abgenommenem, nicht dargestelltem Gehäuseoberteil. Mit einem Bodenteil 7 ist eine Wägezelle 3 durch einen am einen Ende der Wägezelle 3 ausgebildeten Fixbereich 4 gehäusefest verbunden. Am anderen Ende der Wägezelle 3 ist ein Lastaufnahmebereich 5 ausgebildet, der mit einem Lastaufnehmer 2 über mindestens ein Verbindungselement 8 starr verbundenen ist. Am Fixbereich 4 ist zudem ein Signalverarbeitungsmodul 6 angeordnet. In unmittelbarer Nähe zur Wägezelle 3 ist ein Transfermechanismus 30 mit dem Bodenteil 7 verbunden, dessen Transfermechanismusantrieb 33 zwecks Kalibrierung des gravimetrischen Messgeräts 1 zu Beginn des Kalibriervorgangs über einen Transfermechanismushebel 31 ein Kalibriergewicht 100 mit dem Lastaufnahmebereich 5 in Anlage bringt und nach Beendigung des Kalibriervorganges das Kalibriergewicht 100 wieder vom Lastaufnahmebereich 5 der Wägezelle 3 entkoppelt. Im entkoppelten Zustand wird das Kalibriergewicht 100 durch den Transfermechanismushebel 31 gegen eine Niederhaltefeder 35 gedrückt um das Kalibriergewicht 100 gegen Stösse beziehungsweise Erschütterungen während des Transports des gravimetrischen Messgerätes zu sichern.

In Figur 2 ist die perspektivische Explosionsdarstellung eines erfindungsgemässen Kalibriergewichts 100 dargestellt, wobei unterhalb des Kalibriergewichts 100 noch der Transfermechanismushebel 31 und die Wägezelle 3 mit dem Fixbereich 4 und dem Lastaufnahmebereich 5 dargestellt ist. Mit dem Lastaufnahmebereich 5 ist ein Kalibriergewichtsarm 20 starr verbunden, der mindestens eine Positionierungsauflagestelle 21 aufweist.

Das Kalibriergewicht 100 weist ein U- förmiges Kalibriergewichtsgrundmodul 101 auf mit dem drei Positionierungsmittel 104 starr verbunden sind. Deren konische Zentrierflanken 121 positionieren das Kalibriergewichtsgrundmodul 101 beim Auflegen auf die am Kalibriergewichtsarm 20 ausgebildeten Positionierungsauflagestellen 21 gegenüber dem Lastaufnahmebereich 5 der Wägezelle 3 spielfrei. Die ebenfalls am Kalibriergewichtsgrundmodul 101 angebrachten zwei Transferelemente 105 liegen mit ihren Konusflanken 131 in den am Transfermechanismushebel 31 ausgebildeten Transferauflagestellen 32 auf, sobald das Kalibriergewicht 100 vom Kalibriergewichtsarm 20 entkoppelt wird. Über die Befestigungsmittel 103 in Form von Schrauben sind zwei quaderförmige Zusatzgewichte 102 an den als Gewindebohrungen ausgebildeten Befestigungsbereichen 106 des Kalibriergewichtsgrundmoduls 101 angeschraubt.

Ein mit Positionierungsmitteln 104 und Transferelementen 105 versehenes Kalibriergewichtsgrundmodul 101 hat den Vorteil, dass dieses in grosser Anzahl für eine ganze Waagenreihe hergestellt werden kann. Aufwändige Bearbeitungsschritte werden dadurch wie bei den im Stand der Technik offenbarten Kalibriergewichten auf einen Teil konzentriert, aber anders als im Stand der Technik dargelegt, ohne die Einschränkungen auf eine festgelegte Kalibriergewichtsmasse. Die Kalibriergewichtsmasse für die jeweilige Waage 1 einer Waagenreihe kann durch Hinzufügen entsprechender Zusatzgewichte 102, die in ihrer Gestaltung sehr einfach gehalten werden können, variiert beziehungsweise erreicht werden. Verhältnismässig komplizierte Formen wie beispielsweise U- förmige Kalibriergewichte 100 sind erst durch die Verwendung eines erfindungsgemässen Kalibriergewichtsgrundmoduls 101 mit vertretbarem Aufwand herstellbar.

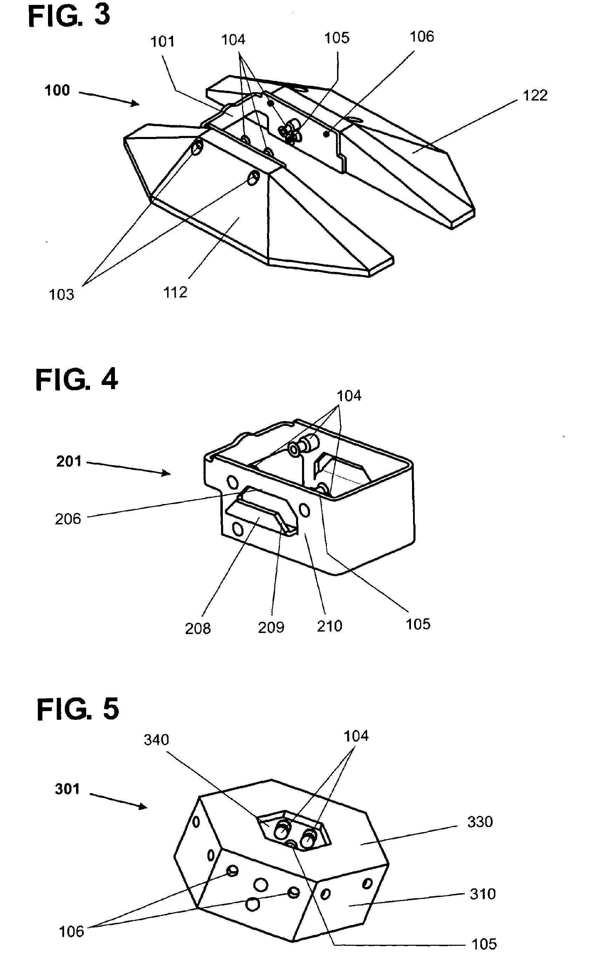

Die Figur 3 zeigt die perspektivische Ansicht eines erfindungsgemässen Kalibriergewichts 100, dessen Kalibriergewichtsgrundmodul 101 mit demjenigen in der Figur 2 beschriebenen, U- förmigen Kalibriergewichtsgrundmodul 101 identisch ist. Das Kalibriergewichtsgrundmodul 101 verfügt ebenfalls über die Positionierungsmittel 104, die Transferelemente 105 und die Befestigungsbereiche 106. Über die Befestigungsmittel 103 in Form von Schrauben sind zwei an die Innenkontur des Waagengehäuses angepasste Zusatzgewichte 112, 122 an den als Gewindebohrungen ausgebildeten Befestigungsbereichen 106 des Kalibriergewichtsgrundmoduls 101 angeschraubt.

Figur 4 zeigt die perspektivische Ansicht eines erfindungsgemässen Kalibriergewichtsgrundmoduls 201 in Ringform. Es verfügt ebenfalls, wie in Figur 2 und Figur 3 beschrieben, über die Positionierungsmittel 104 und die Transferelemente 105. Die Befestigungsbereiche 206 sind als Halter ausgebildet, wobei das nicht dargestellte Zusatzgewicht zwischen einer Wand 210 des Kalibriergewichtsgrundmoduls 201 und einer Lasche 208 geklemmt wird oder mittels nicht dargestellter Befestigungsmittel fixiert ist. Bei geeigneter Ausgestaltung des Zusatzgewichts kann die Laschenflanke 209 als Positionierungshilfe bei der Montage der Zusatzgewichte am Kalibriergewichtsgrundmodul 201 dienen.

In Figur 5 ist in perspektivischer Ansicht ein erfindungsgemässes Kalibriergewichtsgrundmodul 301 in Becherform dargestellt, welches einen Becherboden 330 aufweist. Das in einer hexagonalen Grundform dargestellte Kalibriergewichtsgrundmodul 301 mit der Wand 310 kann auch mehr oder weniger Ecken aufweisen, rund oder oval ausgestaltet sein. Der Becherboden 330 ist mit einer Öffnung 340 zur Durchführung des Lastaufnehmers versehen; der Becherboden 330 kann aber auch geschlossen sein, sofern eine Öffnung 340 nicht notwendig ist. An der Wand 310 sind Befestigungsbereiche 106 in Form von Bohrungen zur Befestigung von Zusatzgewichten ausgebildet. Das Kalibriergewichtsgrundmodul 301 verfügt ebenfalls über Positionierungsmittel 104 und Transferelemente 105.

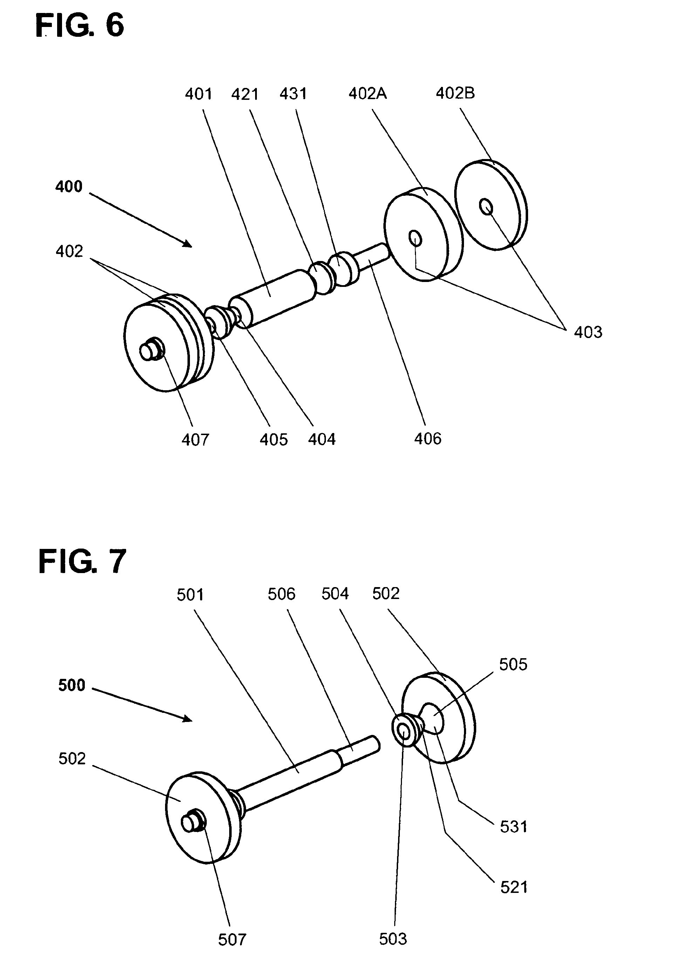

Die Figur 6 zeigt die perspektivische Ansicht eines erfindungsgemässen Kalibriergewichts 400 mit am stabförmigen Kalibriergewichtsgrundmodul 401 ausgebildeten Positionierungsmitteln 404 und Transferelemente 405. Die Positionierungsmittel 404 in Form von Ringnuten sind so gestaltet, dass eine Zentrierflanke 421 gebildet wird; analog dazu sind auch die Transferelemente 405 mit einer Konusflanke 431 versehen. Das stabförmige Kalibriergewichtsgrundmodul 401 ist zudem mit Befestigungsbereichen 406 in Form abgesetzter Wellenenden für ein oder mehrere Zusatzgewichte 402 versehen. Die hier in Scheibenform dargestellten Zusatzgewichte 402 können beliebige Formen und Querschnitte aufweisen und verfügen über zu den Befestigungsbereichen 406 passende Befestigungsmittel 403 in Form von Bohrungen. Ideal ist eine Abstufung der Massen der Zusatzgewichte 402 im Sinne eines Baukastensystems, so dass sich mit wenigen verschiedenen Zusatzgewichten 402A, 402B, ... alle Lastbereiche einer Waagenreihe abbilden lassen. Um die Bildung von Kapillaren zu vermeiden, weisen die Zusatzgewichte 402 zur Beabstandung voneinander mindestens einen Vorsprung 407 auf.

Figur 7 zeigt in perspektivischer Ansicht ein weiteres erfindungsgemässes Kalibriergewicht 500 mit stabförmigem Kalibriergewichtsgrundmodul 501. Anders als in Figur 6 sind am Kalibriergewichtsgrundmodul 501 nur die Befestigungsbereiche 506 ausgebildet, die Positionierungsmittel 504, die Transferelemente 505 und die Befestigungsmittel 503 sind mit dem Zusatzgewicht 502 starr verbunden. Es ist auch denkbar, dass beispielsweise nur das Transferelement 505 am Zusatzgewicht 502, aber das Positionierungsmittel 504 am Kalibriergewichtsgrundmodul 501 angeformt ist. Die Positionierungsmittel 504 in Form von Ringnuten sind so gestaltet, dass eine Zentrierflanke 521 gebildet wird, analog dazu sind auch die Transferelemente 505 mit einer Konusflanke 531 versehen. Das Zusatzgewicht 502 verfügt über einen Vorsprung 507.

In Figur 1 und Figur 2 ist eine mit Dehnmessstreifen bestückte Wägezelle dargestellt. Selbstverständlich kann das erfindungsgemässe Kalibriergewicht auch in weiteren, nach anderen Funktionsprinzipen arbeitenden gravimetrischen Messgeräten eingesetzt werden, die einer Kalibrierung bedürfen. Hierzu gehören insbesondere auch Waagen, deren Wägezellen nach dem Prinzip der elektromagnetischen Kraftkompensation arbeiten.

### Bezugszeichenliste

- 1: gravimetrisches Messgerät, Waage
- 2: Lastaufnehmer
- 3: Wägezelle
- 4: Fixbereich
- 5: Lastaufnahmebereich
- 6: Signalverarbeitungsmodul
- 7: Bodenteil
- 8: Verbindungselement
- 20: Kalibriergewichtsarm
- 21: Positionierungsauflagestelle
- 30: Transfermechanismus
- 31: Transfermechanismushebel
- 32: Transferauflagestelle
- 33: Transfermechanismusantrieb
- 35: Niederhaltefeder
- 100, 400, 500: Kalibriergewicht
- 101, 201, 301, 401, 501: Kalibriergewichtsgrundmodul
- 102, 112, 122, 402, 502: Zusatzgewicht
- 402A, 402B: Zusatzgewicht
- 103, 403, 503: Befestigungsmittel
- 104, 404, 504: Positionierungsmittel
- 105, 405, 505: Transferelement
- 106, 206, 406, 506: Befestigungsbereich
- 121, 421, 521: Zentrierflanke
- 131, 431, 531: Konusflanke
- 208: Lasche
- 209: Laschenflanke
- 210, 310: Wand
- 330: Becherboden
- 340: Öffnung
- 407, 507: Vorsprung

## Patentansprüche

1. Gravimetrisches Messgerät (1), insbesondere eine Waage (1), das mit einer einen Lastaufnahmebereich (5) und einen Fixbereich (4) aufweisenden Wägezelle (3), deren Lastaufnahmebereich (5) mit einem Kalibriergewichtsarm (20) in Verbindung steht, versehen ist und das einen Transfermechanismus (30) zum Koppeln eines Kalibriergewichts an den Kalibriergewichtsarm (20) beziehungsweise Entkoppeln des Kalibriergewichts vom Kalibriergewichtsarm (20)aufweist und das gravimetrische Messgerät (1) ferner ein Waagengehäuse beinhaltet, **dadurch gekennzeichnet, dass** das gravimetrische Messgerät (1) ein Kalibriergewicht (100, 400, 500) aufweist, welches Kalibriergewicht (100, 400, 500) ein Kalibriergewichtsgrundmodul (101, 201, 301,...) aufweist, an dem mindestens ein Befestigungsbereich (106, 206, 406, 506) zur Befestigung von mindestens einem Zusatzgewicht (102, 112, 122,...) ausgebildet ist, und dass das Kalibriergewicht (100, 400, 500) durch die Formgebung des Kalibriergewichtsgrundmoduls (101, 201, 301,...) und/oder daran positionierter Zusatzgewichte (102, 112, 122,...) einer im Innern des Waagengehäuses vorhandenen, durch das Waagengehäuse und/oder die Wägezelle (3) begrenzten Form und/oder einem Volumen angepasst ist.

2. Gravimetrisches Messgerät (1) nach Anspruch 1, **dadurch gekennzeichnet, dass** das Kalibriergewichtsgrundmodul (101, 201, 301,...) mindestens ein Positionierungsmittel (104, 404, 504) zur räumlichen Positionierung des Kalibriergewichts (100, 400, 500) bezüglich des Kalibriergewichtsarms (20) aufweist.

3. Gravimetrisches Messgerät (1) nach Anspruch 2, **dadurch gekennzeichnet, dass** das Positionierungsmittel (104, 404, 504) mindestens eine Zentrierflanke (121, 421, 521) aufweist, die das Kalibriergewicht (100, 400, 500) gegenüber mindestens einer, am Kalibriergewichtsarm (20) ausgebildeten Positionierungsauflagestelle (21) positioniert.

4. Gravimetrisches Messgerät (1) nach einem der Ansprüche 1 bis 3, **dadurch gekennzeichnet, dass** das Kalibriergewichtsgrundmodul (101, 201, 301,...) mindestens ein Transferelement (105, 405, 505) aufweist, das mit dem Transfermechanismus (30) zusammenwirkt.

5. Gravimetrisches Messgerät (1) nach Anspruch 4, **dadurch gekennzeichnet, dass** das Transferelement (105, 405, 505) mindestens eine Konusflanke (131, 431, 531) aufweist, die das Kalibriergewicht (100, 400, 500) gegenüber mindestens einer, am Transfermechanismus (30) ausgebildeten Transferauflagestelle (32) positioniert.

6. Gravimetrisches Messgerät (1) nach einem der Ansprüche 1 bis 5, **dadurch gekennzeichnet, dass** das Kalibriergewichtsgrundmodul (101, 201, 301,...) in Stabform, in U-Form, in H-Form, in Y-Form, in Ringform oder in Becherform ausgebildet ist.

7. Gravimetrisches Messgerät (1) nach Anspruch 4 oder 5, **dadurch gekennzeichnet, dass** die Positionierungsmittel (104, 404, 504) und die Transferelemente (105, 405, 505) eine verschleissfeste Oberfläche aufweisen.

8. Gravimetrisches Messgerät (1) nach einem der Ansprüche 4 bis 7, **dadurch gekennzeichnet, dass** mindestens eine am Kalibriergewichtsarm (20) ausgebildete Positionierungsauflagestelle (21) und mindestens eine am Transfermechanismus (30) ausgebildete Transferauflagestelle (32) eine verschleissfeste Oberfläche aufweist.

9. Gravimetrisches Messgerät (1) nach einem der Ansprüche 1 bis 8, **dadurch gekennzeichnet, dass** die Masse des Kalibriergewichtsgrundmoduls (101, 201, 301,...) der Höchstlast des gravimetrischen Messgerätes mit der niedrigsten zulässigen Höchstlast aus einer Reihe von gravimetrischen Messgeräten mit unterschiedlichen Höchstlasten entspricht.

10. Gravimetrisches Messgerät (1) nach einem der Ansprüche 1 bis 9, **dadurch gekennzeichnet, dass** ein am Kalibriergewichtsgrundmodul (101, 201, 301,...) positioniertes Zusatzgewicht (102, 112, 122,...) aus mehreren Einzelteilen besteht, die starr miteinander verbindbar sind.

11. Gravimetrisches Messgerät (1) nach einem der Ansprüche 1 bis 10, **dadurch gekennzeichnet, dass** ein am Kalibriergewichtsgrundmodul (101, 201, 301,...) positioniertes Zusatzgewicht (102, 112, 122,...) aus mehreren Einzelteilen besteht, wobei einzelne Teile dieses Gewichts im Sinne eines Kettengewichts mindestens linear in Lastrichtung mit begrenztem Weg verschiebbar sind.

12. Gravimetrisches Messgerät (1) nach einem der Ansprüche 1 bis 11, **dadurch gekennzeichnet, dass** ein am Kalibriergewichtsgrundmodul (101, 201, 301,...) positioniertes Zusatzgewicht (102, 112, 122,...) zur Vermeidung der Bildung von Spalten mit Kapillarwirkung mindestens einen Vorsprung (407, 507) aufweist, der das Zusatzgewicht (102, 112, 122,...) von ebenen Flächen des Kalibriergewichtsgrundmoduls (101, 201, 301,...) oder von den Flächen benachbarter Zusatzgewichte (102, 112, 122,...) distanziert.

13. Gravimetrisches Messgerät (1) nach einem der Ansprüche 1 bis 12, **dadurch gekennzeichnet, dass** ein einen nicht oxidationsfesten Werkstoff aufweisendes Zusatzgewicht (102, 112, 122,...) oder Kalibriergewichtsgrundmodul (101, 201, 301,...) mit einer oxidationsfesten Schicht versehen ist.

14. Gravimetrisches Messgerät (1) nach einem der Ansprüche 1 bis 13, **dadurch gekennzeichnet, dass** ein mehrere Teile aufweisendes Zusatzgewicht (102, 112, 122,...) oder ein komplettes Kalibriergewicht (100, 400, 500) zur Schliessung von Spalten mit Kapillarwirkung im Sinne einer Versiegelung und/oder im Sinne eines Befestigungsmittels mit einer Oberflächenbeschichtung versehen ist.

## Claims

1. Gravimetric measuring instrument (1), in particular for a balance (1) equipped with a weighing cell (3) having a load-receiving part (5) and a stationary part (4), wherein the load receiving part (5) is connected to a calibration weight arm (20), and wherein the gravimetric measuring instrument (1) further has a transfer mechanism (30) for coupling a calibration weight to the calibration weight arm (20) and for uncoupling the calibration weight from the calibration weight arm (20) and wherein the gravimetric measuring instrument (1) further has a balance housing, **characterized in that** the gravimetric measuring instrument (1) has a calibration weight (100, 400, 500) which comprises a calibration weight base module (101, 201, 301, ...) on which at least one attachment area (106, 206, 406, 506) is formed for attaching at least one supplemental weight (102, 112, 122, ...), and that the calibration weight (100, 400, 500), by virtue of the shape given to the calibration weight base module (101, 201, 301, ...) and/or to supplemental weights (102, 112, 122, ...) that are attached on the calibration weight base module (101, 201, 301, ...), is adapted to conform to a shape and /or volume of a space available inside the balance housing, which space is limited by the shape of the weighing cell (3) and /or the balance housing.

2. Gravimetric measuring instrument (1) according to claim 1, **characterized in that** the calibration weight base module (101, 201, 301, ...) comprises at least one positioning means (104, 404, 504) for the spatial positioning of the calibration weight (100, 400, 500) relative to the calibration weight arm (20).

3. Gravimetric measuring instrument (1) according to claim 2, **characterized in that** the positioning means (104, 404, 504) has at least one centering flank (121, 421, 521) which positions the calibration weight (100, 400, 500) in relation to at least one position-defining seating position (21) which is formed on the calibration weight arm (20).

4. Gravimetric measuring instrument (1) according to one of the claims 1 to 3, **characterized in that** the calibration weight base module (101, 201, 301, ...) comprises at least one transfer element (105, 405, 505) which cooperates with the transfer mechanism (30).

5. Gravimetric measuring instrument (1) according to claim 4, **characterized in that** the transfer element (105, 405, 505) comprises at least one conically tapered flank (131, 431, 531) which positions the calibration weight (100, 400, 500) in relation to at least one transfer seating area (32) that is formed on the transfer mechanism (30).

6. Gravimetric measuring instrument (1) according to one of the claims 1 to 5, **characterized in that** the calibration weight base module (101, 201, 301, ...) has a rod-shaped, U-shaped, H-shaped, Y-shaped, ring-shaped, or cup-shaped configuration.

7. Gravimetric measuring instrument (1) according to claim 4 or 5, **characterized in that** the positioning means (104, 404, 504) and the transfer element (105, 405, 505) have a wear-resistant surface.

8. Gravimetric measuring instrument (1) according to one of the claims 4 to 7, **characterized in that** at least one position-defining seating area (21) formed on the calibration weight arm (20) and at least one transfer seating area (32) formed on the transfer mechanism (30) have a wear-resistant surface.

9. Gravimetric measuring instrument (1) according to one of the claims 1 to 8, **characterized in that** the mass of the calibration weight base module (101, 201, 301, ...) corresponds to the capacity load of the gravimetric measuring instrument with the lowest capacity load in a model series of gravimetric measuring instruments with different capacity loads.

10. Gravimetric measuring instrument (1) according to one of the claims 1 to 9, **characterized in that** a supplemental weight (102, 112, 122, ...) positioned on the calibration weight base module (101, 201, 301, ...) consists of a plurality of individual parts that are rigidly connected to each other.

11. Gravimetric measuring instrument (1) according to one of the claims 1 to 10, **characterized in that** a supplemental weight (102, 112, 122, ...) positioned on the calibration weight base module (101, 201, 301, ...) consists of a plurality of individual components, wherein individual parts of said weight are movable in the sense of a chain weight at least along a linear path in the load direction within a limited travel range.

12. Gravimetric measuring instrument (1) according to one of the claims 1 to 11, **characterized in that** a supplemental weight (102, 112, 122, ...) positioned on the calibration weight base module (101, 201, 301, ...) has at least one projection (407, 507) serving to prevent the formation of crevices with a capillary effect, wherein said at least one projection (407, 507) keeps the supplemental weight (102, 112, 122, ...) spaced away from flat surfaces of the calibration weight base module (101, 201, 301, ...) or from the surfaces of adjacent supplemental weights (102, 112, 122, ...).

13. Gravimetric measuring instrument (1) according to one of the claims 1 to 12, **characterized in that** a supplemental weight (102, 112, 122, ...) or calibration weight base module (101, 201, 301, ...) comprising a material that is not oxidation-resistant is provided with an oxidation-resistant coating.

14. Gravimetric measuring instrument (1) according to one of the claims 1 to 13, **characterized in that** a supplemental weight comprising a plurality of parts (102, 112, 122, ...) or a complete calibration weight (100, 400, 500) is provided with a surface coating in the sense of a seal-coating and/or in the sense of a fastening means for the purpose of closing off crevices which could have a capillary effect.

## Revendications

1. Appareil de mesure (1) gravimétrique, en particulier une balance (1), qui est doté d'une cellule de pesée (3) présentant une zone d'accrochage de charge (5) et une zone de fixation (4), dont la zone d'accrochage de charge (5) est en liaison avec un bras de poids de calibrage (20), et qui présente un mécanisme de transfert (30) pour le couplage d'un poids de calibrage avec le bras du poids de calibrage (20) ou la dissociation du bras du poids de calibrage (20) du bras du poids de calibrage (20) et l'appareil de mesure (1) gravimétrique contenant également un carter de balance, **caractérisé en ce que** l'appareil de mesure (1) gravimétrique présente un poids de calibrage (100, 400, 500), lequel poids de calibrage (100, 400, 500) présente un module de base du poids de calibrage (101, 201, 301, ...), sur lequel est réalisée au moins une zone de fixation (106, 206, 406, 506) pour la fixation d'au moins un poids supplémentaire (102, 112, 122, ...), et **en ce que** le poids de calibrage (100, 400, 500) est adapté par le formage du module de base du poids de calibrage (101, 201, 301, ...) et/ou de poids supplémentaires (102, 112, 122, ...) positionnés dessus à une forme présente à l'intérieur du carter de balance et délimité par le carter de balance et/ou la cellule de pesée (3) et/ou un volume.

2. Appareil de mesure (1) gravimétrique selon la revendication 1, **caractérisé en ce que** le module de base du poids de calibrage (101, 201, 301, ...) présente au moins un moyen de positionnement (104, 404, 504) pour le positionnement dans l'espace du poids de calibrage (100, 400, 500) par rapport au bras du poids de calibrage (20).

3. Appareil de mesure (1) gravimétrique selon la revendication 2, **caractérisé en ce que** le moyen de positionnement (104, 404, 504) présente au moins un flanc de centrage (121, 421, 521), qui positionne le poids de calibrage (100, 400, 500) par rapport à au moins un point d'appui de positionnement (21) réalisé sur le bras du poids de calibrage (20).

4. Appareil de mesure (1) gravimétrique selon l'une quelconque des revendications 1 à 3, **caractérisé en ce que**
le module de base du poids de calibrage (101, 201, 301, ...) présente au moins un élément de transfert (105, 405, 505), qui coopère avec le mécanisme de transfert (30).

5. Appareil de mesure (1) gravimétrique selon la revendication 4, **caractérisé en ce que** l'élément de transfert (105, 405, 505) présente au moins un flanc conique (131, 431, 531), qui positionne le poids de calibrage (100, 400, 500) en face d'au moins un point d'appui de transfert (32) réalisé sur le mécanisme de transfert (30).

6. Appareil de mesure (1) gravimétrique selon l'une quelconque des revendications 1 à 5, **caractérisé en ce que**
le module de base du poids de calibrage (101, 201, 301, ...) est en forme de barre, de U, de H, de Y, de bague ou de gobelet.

7. Appareil de mesure (1) gravimétrique selon la revendication 4 ou 5,
**caractérisé en ce que** les moyens de positionnement (104, 404, 504) et les éléments de transfert (105, 405, 505) présentent une surface résistant à l'usure.

8. Appareil de mesure (1) gravimétrique selon l'une quelconque des revendications 4 à 7, **caractérisé en ce qu'**au moins un point d'appui de positionnement (21) conçu sur le bras du poids de calibrage (20) et au moins un point d'appui de transfert (32) conçu sur le mécanisme de transfert (30) présentent une surface résistant à l'usure.

9. Appareil de mesure (1) gravimétrique selon l'une quelconque des revendications 1 à 8, **caractérisé en ce que** la masse du module de base du poids de calibrage (101, 201, 301, ...) correspond à la charge maximale de l'appareil de mesure gravimétrique avec la charge minimale autorisée à partir d'une série d'appareils de mesure gravimétriques présentant des charges maximales différentes.

10. Appareil de mesure (1) gravimétrique selon l'une quelconque des revendications 1 à 9, **caractérisé en ce qu'**un poids supplémentaire (102, 112, 122, ...) positionné sur le module de base du poids de calibrage (101, 201, 301, ...) est composé de plusieurs parties individuelles, qui peuvent être reliées de façon rigide les unes aux autres.

11. Appareil de mesure (1) gravimétrique selon l'une quelconque des revendications 1 à 10, **caractérisé en ce qu'**un poids supplémentaire (102, 112, 122, ...) positionné sur le module de base du poids de calibrage (101, 201, 301,...) est constitué de plusieurs parties individuelles, des parties individuelles de ce poids pouvant être glissées dans le sens d'un poids de chaîne au moins dans le sens linéaire dans le sens de charge avec une course limitée.

12. Appareil de mesure (1) gravimétrique selon l'une quelconque des revendications 1 à 11, **caractérisé en ce qu'**un poids supplémentaire (102, 112, 122, ...) positionné sur le module de base du poids de calibrage (101, 201, 301, ...) présente, afin d'éviter la formation de fentes avec effet capillaire, au moins une partie saillante (407, 507) qui met à distance le poids supplémentaire (102, 112, 122, ...) de surfaces planes du module de base du poids de calibrage (101, 201, 301, ...) ou des surfaces de poids supplémentaires (102, 112, 122, ...) voisins.

13. Appareil de mesure (1) gravimétrique selon l'une quelconque des revendications 1 à 12, **caractérisé en ce qu'**un poids supplémentaire (102, 112, 122, ...) ou un module de base du poids de calibrage (101, 201, 301,...) présentant un matériau non résistant à l'oxydation est doté d'une couche résistante à l'oxydation.

14. Appareil de mesure (1) gravimétrique selon l'une quelconque des revendications 1 à 13, **caractérisé en ce qu'**un poids supplémentaire (102, 112, 122, ...) présentant plusieurs parties ou un poids de calibrage (100, 400, 500) complet est doté d'un revêtement de surface pour la fermeture de fentes avec effet capillaire dans le sens d'un scellement et/ou dans le sens d'un moyen de fixation.
